# EUROPEAN PATENT SPECIFICATION

(11) **EP 4 250 516 B1**
(45) Date of publication and mention of the grant of the patent: **08.07.2026**
(21) Application number: 21895196.0
(22) Date of filing: 16.11.2021
(51) Int. Cl.: H02J 7/00, H02M 7/04, H02M 3/00, H02J 3/32, H02J 7/02, H02J 7/04

(54) **DEVICE AND METHOD FOR SOC BALANCE CONTROL FOR DELTA STRUCTURE SEMICONDUCTOR TRANSFORMER-BASED ENERGY STORAGE DEVICE**
VORRICHTUNG UND VERFAHREN ZUR SOC-BALANCE-STEUERUNG FÜR EINE AUF EINEM DELTA-STRUKTUR-HALBLEITERTRANSFORMATOR BASIERENDE ENERGIESPEICHERVORRICHTUNG
DISPOSITIF ET PROCÉDÉ DE COMMANDE D'ÉQUILIBRAGE DE SOC POUR DISPOSITIF DE STOCKAGE D'ÉNERGIE BASÉ SUR UN TRANSFORMATEUR À SEMI-CONDUCTEUR À STRUCTURE DELTA

(30) Priority: 18.11.2020 KR 20200155018
(43) Date of publication of application: 27.09.2023
(73) Proprietor: Hyosung Heavy Industries Corporation, Seoul 04144 (KR)
(72) Inventor: JEONG, Byung Hwan, Gwacheon-si, Gyeonggi-do 13835 (KR); SEO, Hae Won, Seoul 03789 (KR); BYEN, Byeng Joo, Suwon-si, Gyeonggi-do 16695 (KR); KIM, Jae Hyuk, Gwacheon-si, Gyeonggi-do 13802 (KR); KIM, Sung Joo, Goyang-si, Gyeonggi-do 10218 (KR)
(74) Representative: Viering, Jentschura & Partner mbB Patent- und Rechtsanwälte
(86) International application number: PCT/KR2021/095104
(87) International publication number: WO 2022/108429

(56) References cited:
- CN-A- 105 337 297
- JP-A- 2014 233 122
- JP-A- 2015 108 967
- KR-A- 20150 039 957
- US-A1- 2009 091 295
- US-A1- 2020 127 458
- VASILADIOTIS MICHAIL ET AL: "A Modular Multiport Power Electronic Transformer With Integrated Split Battery Energy Storage for Versatile Ultrafast EV Charging Stations", IEEE TRANSACTIONS ON INDUSTRIAL ELECTRONICS, IEEE SERVICE CENTER, PISCATAWAY, NJ, USA, vol. 62, no. 5, 1 May 2015 (2015-05-01), pages 3213 - 3222, XP011577635, ISSN: 0278-0046, [retrieved on 20150408], DOI: 10.1109/TIE.2014.2367237
- DIAZ-GONZALEZ FRANCISCO ET AL: "A Comparison of Power Conversion Systems for Modular Battery-Based Energy Storage Systems", IEEE ACCESS, IEEE, USA, vol. 8, 7 February 2020 (2020-02-07), pages 29557 - 29574, XP011773276, DOI: 10.1109/ACCESS.2020.2972412
- KIM JAE-HYUK, YOON-SEOK LEE, BYUNG-MOON HAN: "Sub-module Battery SOC Balancing Control for BESS Based on MMC with Delta Configuration", PROCEEDINGS OF THE KOREAN INSTITUTE OF POWER ELECTRONICS (KIPE) AUTUMN CONFERENCE, vol. 2017, no. 11a, 24 November 2017 (2017-11-24), pages 97 - 98, XP055931448

## Description

### Technical Field

The present invention relates to an SoC (State of Charge) equalization control device and method of an energy storage device based on a delta structure semiconductor transformer, and more particularly, to controlling so that a battery SoC inside the energy storage device based on the delta structure semiconductor transformer can be equalized.

### Background Art

Recently, due to a rapid increase in power demand, generation of a new renewable energy power and development of a battery energy storage system (BESS) are required.

A PCS (Power Conditioning System) for a BESS basically needs to have a function of performing bi-directional power control of a DC power supply and an AC power supply between a power grid and a battery, improving reliability of the power grid and quickly supplying stored energy during peak power demand.

Recently, as the demand for large-capacity BESS increases, development of structures and control algorithms of PCSs for large-capacity BESS is actively progressing. There is a disadvantage that, when SoCs (States of Charge) of batters connected to modules are not equalized, utilization efficiency of the batteries can drop rapidly, and research to overcome this advantage has been continued.

For example, Korean Patent Publication No. 10-2013-0118395 discloses an SoC equalization control method in a battery charging/discharging system of a cascade H-bridge Multi-level structure in which a 21-level output voltage is formed by connecting four H-Bridge modules having a voltage ratio of 1:2:3:4 in series and un-equalized SoCs of the batteries connected to the respective modules are suppressed depending on appropriate selection of a gate pattern, so that an output voltage close to a sine wave is formed by using a small number of the H-Bridge modules, a harmonics of output voltages and currents are reduced through a harmonic reduction algorithm, and a utilization rate of battery is improved by actively suppressing the un-equalized SoCs of the batteries connected to the respective modules.

However, in this case, there is a disadvantage that, while it is possible to control the battery SoC equalization of the PCS connected in the Y connection, it is impossible to control the battery SoC equalization of the PCS connected in the delta connection. VASILADIOTIS MICHAIL ET AL: "A modular Multiport Power Electronic Transformer With Integrated Split Battery Energy Storage for Versatile Ultrafast EV Charging Stations", IEEE TRANSACTIONS ON INDUSTRIAL ELECTRONICS, IEEE SERVICE CENTER, PISCATAWAY, NJ,USA, vol. 62, no. 5, 1 May 2025, pages 3213-3222, XP011577635 discloses that a modular multiport power electronic transformer for ultrafast EV charging uses a cascaded H-bridge converter for grid connection, integrated split battery storage as a power buffer, and parallel dual-half-bridge dc/dc converters for multiport charging.
CN 105 337 297 A discloses a balancing method and the device for the SOC of an energy storage system. The method comprises the steps that the average value of SOC values of all energy storage units on each phase circuit in three phases of circuits of a gird is calculated respectively so that the average value of the SOC values corresponding to each phase circuit is obtained, and the average value of the SOC values of the three phases of circuits is calculated according to the average value of the SOC values corresponding to the three phases of circuits; a first triangle is formed taking the average value of the SOC values of the three phases of circuits as a center line, and the gravity center phasor of the first triangle is obtained; a second triangle is formed taking the average value of the SOC values corresponding to the three phases of circuits as a center line, and the gravity center phasor of the second triangle is obtained; reference zero sequence voltage is calculated according to the gravity center phasor of the first triangle and the gravity center phasor of the second triangle; the reference zero sequence voltage is added to voltage of the three phases of circuits respectively.
Kim Jae-Hyuk, Yoon-Seok Lee, Byung-Moon Han: "Sub-module Battery SOC Balancing Control for BESS Based on MMC with Delta Configuration", Proceedings of The Korean Institute of Power Electronics (KIPE) Autumn Conference, vol. 2017, no. 11a, 24 November 2017, pages 97-98, XP055931448 discloses a state-of-charge (SoC) balancing control strategy for a battery energy storage system (BESS) based on a delta-configured modular multilevel converter (MMC) with full-bridge submodules. It describes two controllers: one for balancing the average SoC across the three MMC branches using circulating current, and another for individual submodule SoC balancing within each branch.
KR 2015 0039957 A discloses a method for SOC balance control of a battery charging and discharging system having a cascade H-bridge multi-level structure, which comprises the steps of: (a) controlling a DC link voltage ratio of each module at a ratio of 1:2:3:4 by operating a 2-quadrant interleaving 21-level converter; (b) outputting a reference value of a voltage level to be output at every control cycle by receiving an output voltage reference value generated by a current controller as a round function, by the 21-level converter; (c) selecting a gate pattern for forming the reference value voltage level of the 21-level converter, by a look-up table of the gate pattern; and (d) forming an output voltage by operating each module using the gate pattern for maintaining a current conduction time of the module associated with a battery having a highest SOC for a predetermined time by periodically measuring the SOC of the battery associated with each module, by a controller.

### Summary of Invention

### Technical Problem

An object of the present invention is to provide an SoC equalization control device and method of an energy storage device based on a delta structure semiconductor transformer that prevents overdischarging and overcharging of a specific battery by performing equalization control for SoCs of batteries of PCSs connected in a delta connection.

In addition, other object of the present invention is to an SoC equalization control device and method of an energy storage device based on a delta structure semiconductor transformer capable of effectively operating a charging time and a discharging time of a system by performing equalization control of each-phase battery SoCs with control of zero phase components of a delta connection and equalizing individual battery SoCs.

### Solution to Problem

An SoC equalization control device of an energy storage device based on a delta structure semiconductor transformer according to claim 1 is disclosed. A SoC equalization control device of an energy storage device based on a delta structure semiconductor transformer may include: an A-phase PCS, a B-phase PCS, and a C-phase PCS in which PCSs (Power Conditioning Systems) performing charging/discharging from a 3-phase AC power supply are connected in a delta connection;
and an SoC equalization control device controlling the charging/discharging of a battery so that battery SoCs (State of Charge) of the PCSs are equalized.

Herein, at least two or more PCSs in the A-phase PCS, the B-phase PCS, and the C-phase PCS may connected in series therein.

In addition, the PCS may include: an AC/DC converter converting an alternating current (AC) into a direct current (DC) and storing power in the capacitor; and a DC/DC converter performing DC/DC conversion in order to store the power stored in the capacitor in the battery.

Herein, the SoC equalization control device may include a positive/negative/zero phase component extraction unit extracting powers of the positive, negative, and zero components of the delta connection; an each-phase SoC equalization control unit calculating a total zero phase component AC voltage command value based on an output of the positive/negative/zero phase component extraction unit for the equalization control of the each-phase battery SoC of the A-phase PCS, the B-phase PCS, and the C-phase PCS; an individual SoC equalization control unit calculating an individual capacitor voltage command value for the equalization control of individual battery SoC of the A-phase PCS, the B-phase PCS, and the C-phase PCS; an AC voltage control unit calculating an each-phase AC voltage command value based on outputs of the positive/negative phase/zero phase component extraction unit and the each-phase SoC equalization control unit; a battery voltage control unit calculating an individual battery voltage command value based on an output of the individual SoC equalization control unit; an AC/DC converter control unit controlling the AC/DC converter of the PCS based on outputs of the individual SoC equalization control unit and the AC voltage control unit; and a DC/DC converter control unit controlling the DC/DC converter of the PCS based on an output of the battery voltage control unit.

Also, the positive/negative/zero phase component extraction unit may extract the powers of the positive, negative, and zero phase components based on the each-phase AC voltage and the each-phase AC current.

Herein, the each-phase SoC equalization control unit may include an A-phase zero phase component power command value calculation unit calculating a zero phase component power command value of the A-phase PCS based on a difference between the average battery SoC of the A-phase PCS and the total battery SoC and the average battery voltage of the A-phase PCS; a B-phase zero phase component power command value calculation unit calculating a zero phase component power command value of the B-phase PCS based on a difference between the average battery SoC of the B-phase PCS and the total battery SoC and the average battery voltage of the B-phase PCS; a C-phase zero phase component power command value calculation unit calculating a zero phase component power command value of the C-phase PCS based on a difference between the average battery SoC of the C-phase PCS and the total battery SoC and the average battery voltage of the C-phase PCS; a zero phase component current command value calculation unit calculating a total zero phase component current command value based on outputs of the A-phase zero component power command value calculation unit, the B-phase zero component power command value calculation unit, and the C-phase zero component power command value calculation unit; and a zero phase component voltage command value calculation unit calculating a total zero phase component voltage command value based on a difference between an output of the zero phase component current command value calculation unit and a current total zero phase component current.

In addition, the individual SoC equalization control unit may calculate an individual battery charging/discharging voltage command value based on the difference of the individual SoCs compared to the each-phase average SoC and may calculate the individual capacitor voltage command value based on the individual battery charging/discharging voltage command value and the total capacitor voltage command value that is an average of the individual capacitor voltage command value.

Herein, the battery voltage control unit may calculate the individual battery voltage command value for controlling the DC/DC converter of the PCS based on a difference between the individual capacitor voltage and the individual capacitor voltage command value and the individual battery voltage.

In addition, the AC/DC converter control unit may control the AC/DC converter of the PCS based on the ratio of the individual capacitor voltage command value and the total capacitor voltage command value that is an average of the individual capacitor voltage command value and the each-phase voltage command value.

According to another embodiment of the present invention, the SoC equalization controlling method of the delta structure semiconductor transformer-based energy storage device according to claim 8 is disclosed. The SoC equalization controlling method of the delta structure semiconductor transformer-based energy storage device may include a positive/negative/zero phase component extracting process of extracting powers of positive, negative, and zero phase components of an A-phase PCS, a B-phase PCS, and a C-phase PCS in which PCSs performing charging/discharging from a 3-phase AC power supply are connected in a delta connection; an each-phase SoC equalization control process of calculating a total zero phase component AC voltage command value based on the powers of the positive, negative, and zero phase components for equalization control of each-phase battery SoCs of the A-
phase PCS, the B-phase PCS, and the C-phase PCS; an individual SoC equalization controlling process of calculating an individual capacitor voltage command value for equalization control of individual battery SoCs of the A-phase PCS, the B-phase PCS, and the C-phase PCS; an AC voltage controlling process of calculating an each-phase AC voltage command value based on the powers of the positive, negative, and zero phase components and the total zero phase component AC voltage command value; a battery voltage controlling process of calculating an individual battery voltage command value based on an output of the individual capacitor voltage command value; an AC/DC converter controlling process of controlling the AC/DC converter of the PCS based on the individual capacitor voltage command value and the each-phase AC voltage command value; and a DC/DC converter controlling process of controlling the DC/DC converter of the PCS based on the individual battery voltage command value.

Herein, the positive/negative/zero phase component extracting process may be to extract the powers of positive, negative, and zero phase components based on the each-phase AC voltage and the each-phase AC current.

In addition, the each-phase SoC equalization control step may include steps of: calculating a zero phase component power command value of the A-phase PCS based on a difference of average battery SoC of the A-phase PCS compared to a total battery SoC and an average battery voltage of the A-phase PCS by an A-phase zero phase component power command value calculation unit; calculating a zero phase component power command value of the B-phase PCS based on a difference of average battery SoC of the B-phase PCS compared to a total battery SoC and an average battery voltage of the B-phase PCS by an B-phase zero phase component power command value calculation unit; calculating a zero phase component power command value of the C-phase PCS based on a difference of average battery SoC of the C-phase PCS compared to a total battery SoC and an average battery voltage of the C-phase PCS by an C-phase zero phase component power command value calculation unit; calculating a total zero phase component current command value based on outputs of the A-phase zero phase component power command value calculation unit, the B-phase zero phase component power command value calculation unit, and the C-phase zero phase component power command value calculation unit by a zero phase component current command value calculation unit; and calculating a total zero phase component voltage command value based on a difference between an output of the zero phase component current command value calculation unit and a current total zero phase component current by a zero phase component voltage command value calculation unit.

Herein, the individual SoC equalization controlling step may be to calculate an individual battery charging/discharging voltage command value based on the difference of the individual SoC compared to an each-phase average SoC and calculate the individual capacitor voltage command value based on the individual charging/discharging voltage command value and a total capacitor voltage command value that is an average of the individual capacitor voltage command value.

In addition, the battery voltage controlling step may be to calculate the individual battery voltage command value for controlling the DC/DC converter of the PCS based on a difference between the individual capacitor voltage and the individual capacitor voltage command value and the individual battery voltage.

Herein, the AC/DC converter controlling step may be to control the AC/DC converter of the PCS based on a ratio of the individual capacitor voltage command value and the total capacitor voltage command value that is an average of the individual capacitor voltage command value and the each-phase voltage command value.

### Advantageous Effects of Invention

The SoC equalization control device and method of the energy storage device based on the delta structure semiconductor transformer according to the present invention has an advantage of preventing overdischarging and overcharging of a specific battery by performing equalization control for SoCs of batteries of PCSs connected in a delta connection.

In addition, the SoC equalization control device and method of the energy storage device based on the delta structure semiconductor transformer according to the present invention has an advantage in that a charging time and a discharging time of a system can be effectively operated by performing equalization control of each-phase battery SoCs with control of zero phase components of a delta connection and equalizing individual battery SoCs.

### Brief description of the drawings

FIG. 1 is a block diagram illustrating the SoC equalization control device of the energy storage device based on the delta structure semiconductor transformer according to the embodiment of the present invention.
FIG. 2 is a diagram illustrating the A-phase PCS of FIG. 1 in detail.
FIG. 3 is a diagram illustrating the first PCS of FIG. 2 in detail.
FIG. 4 is a diagram illustrating the SoC equalization control device of FIG. 1 in detail.
FIG. 5 is a diagram illustrating the SoC equalization control device for each phase of FIG. 4 in detail.
FIG. 6 is the graph analyzing current flowing through the A-phase PCS, the B-phase PCS, and the C-phase PCS of FIG. 1.
FIG. 7 illustrates in detail current flowing in the A-phase PCS, the B-phase PCS, the C-phase PCS, and the 3-phase AC power supply of FIG. 1 in detail, FIG. 7A is a waveform diagram illustrating the phase current of the delta connection, and FIG. 7B is a waveform diagram illustrating the supply current of the 3-phase AC power, which is the input of the delta connection.
FIG. 8 is a flowchart illustrating the SoC equalization controlling method of the energy storage device based on the delta structure semiconductor transformer according to the embodiment of the present invention.

### Description of Embodiments

Specific embodiments for carrying out the present invention will be described with reference to the accompanying drawings.

The present invention can be variously changed and can have various embodiments, and thus, specific embodiments are illustrated in the drawings and described in detail in the detailed description. This is not intended to limit the present invention to the specific embodiment, and it can be understood to include all modifications, equivalents, and substitutes included within the spirit and scope of the invention.

Hereinafter, the SoC equalization control device and method of the energy storage device based on the delta structure semiconductor transformer according to the present invention will be described in detail with reference to the accompanying drawings.

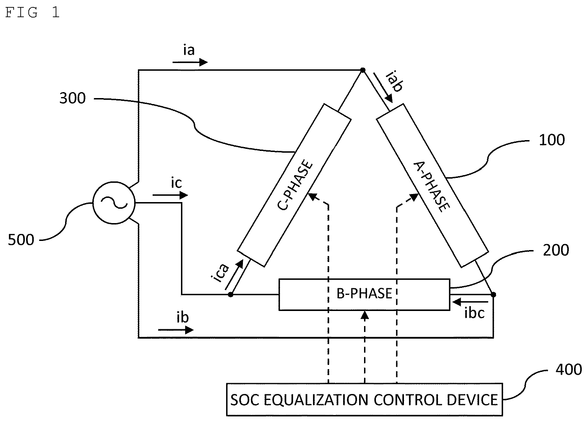

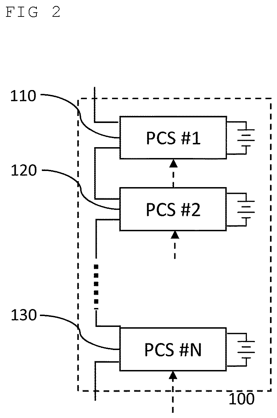

FIG. 1 is a block diagram illustrating the SoC equalization control device of the energy storage device based on the delta structure semiconductor transformer according to the embodiment of the present invention, and FIGS. 2 to 7 are detailed diagrams illustrating FIG. 1 in detail.

Hereinafter, the SoC equalization control device of the energy storage device based on the delta structure semiconductor transformer according to the embodiment of the present invention will be described with reference to FIGS. 1 to 7.

First, referring to FIG. 1, the SoC equalization control device of the energy storage device based on the delta structure semiconductor transformer according to the embodiment of the present invention includes an A-phase PCS 100, a B-phase PCS 200, and a C-phase PCS 300 in which PCSs (Power Conditioning Systems) performing charging/discharging from a 3-phase AC power supply 500 are connected in a delta connection, and an SoC equalization control device 400 that controls the charging/discharging of the battery so that battery SoCs (State of Charge) of the PCSs are equalized.

Herein, the 3-phase AC power supply 500 represents the power grid to which the distributed power is connected, and SoC equalization control device of the energy storage device based on the delta structure semiconductor transformer can serve as storing the power of this grid in the battery or supply the power stored in the battery to the grid again.

At this time, since the different SoC can be illustrated due to the differences in characteristics between the batteries, there is a disadvantage in that a specific battery deteriorates when the equalization control is not performed.

Therefore, in the present invention, by performing the equalization control on individual battery SoCs in a PCS, overdischarging and overcharging caused by un-equalized battery SoC can be prevented, and the charging time and the discharging time of the system can be effectively managed. In addition, the phenomenon in which the charging time and the discharging time are limited by the specific battery due to un-equalized battery SoC can be prevented.

FIG. 2 is a diagram illustrating the A-phase PCS 100 of FIG. 1 in detail.

As illustrated in FIG. 2, at least two or more PCSs inside the A-phase PCS 100, the B-phase PCS 200, or the C-phase PCS 300 can be connected in series therein.

That is, in order to store the large amount of power, the plurality of PCSs such as the first PCS 110, the second PCS 120, and the N-th PCS 130 can be connected in series. For example, when the 3-phase AC power supply 500 is 6.6 kV and 60 Hz, in order to achieve the system rated capacity of 10 MW, each phase reactor of 5 mH and ten PCSs can be connected in series, and at this time, 1,155 V and 69 Ah can be used for a battery pack per PCS.

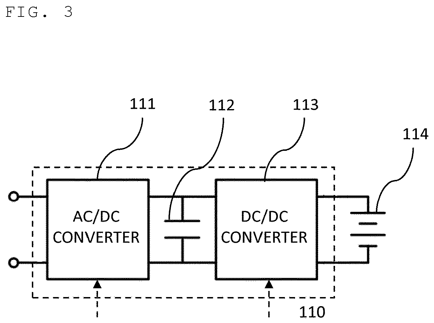

FIG. 3 is a diagram illustrating the first PCS 110 of FIG. 2 in detail.

As illustrated in FIG. 3, the PCS includes an AC/DC converter 111 that converts an alternating current (AC) into a direct current (DC) and stores the power in the capacitor 112 and a DC/DC converter 113 that performs DC/DC conversion in order to store the power stored in the capacitor 112 in the battery 114.

Herein, since the same current flows in the PCSs connected to one phase, the voltage charged in the capacitor 112 is determined by controlling the input AC voltage of the PCS, and the charging voltage of the battery 114 is determined by controlling the DC/DC converter 113.

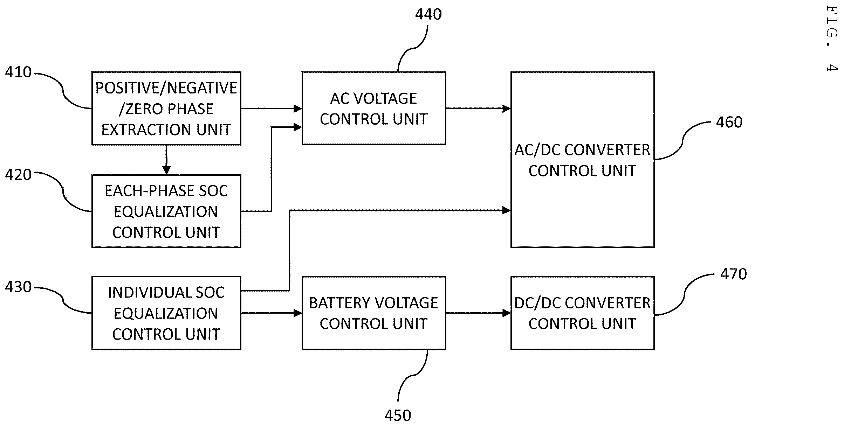

At this time, the control of the AC/DC converter 111 is determined according to the each-phase battery SoC and the individual battery SoC, and the control of the DC/DC converter 113 is determined according to the individual battery SoC. Hereinafter, the operations will be described in detail with reference to FIGS. 4 to 7.

FIG. 4 is a diagram illustrating the SoC equalization control device 400 of FIG. 1 in detail.

As illustrated in FIG. 4, the SoC equalization control device 400 includes a positive/negative/zero phase component extraction unit 410 that extracts the powers of the positive, negative, and zero components of the delta connection, an each phase SoC equalization control unit 420 calculating a total zero phase component AC voltage command value based on an output of the positive/negative/zero phase component extraction unit 410 for the equalization control of the each-phase battery SoC of the phase PCS 100, the B-phase PCS 200, and the C-phase PCS 300, an individual SoC equalization control unit 430 calculating the individual capacitor voltage command value for the equalization control of individual battery SoC of the A-phase PCS 100, the B-phase PCS 200, and the C-phase PCS 300, an AC voltage control unit 440 calculating the each-phase AC voltage command value based on outputs of the positive/negative phase/zero phase component extraction unit 410 and the each-phase SoC equalization control unit 420, a battery voltage control unit 450 calculating the individual battery voltage command value based on an output of the individual SoC equalization control unit 430, an AC/DC converter control unit 460 that controls the AC/DC converter 111 of the PCS based on outputs of the individual SoC equalization control unit 430 and the AC voltage control unit 440, and a DC/DC converter control unit 470 that controls the DC/DC converter 113 of the PCS based on an output of the battery voltage control unit 450.

In this case, the positive/negative/zero phase component extraction unit 410 can extract the powers of the positive, negative, and zero phase components based on the each-phase AC voltage and the each-phase AC current.

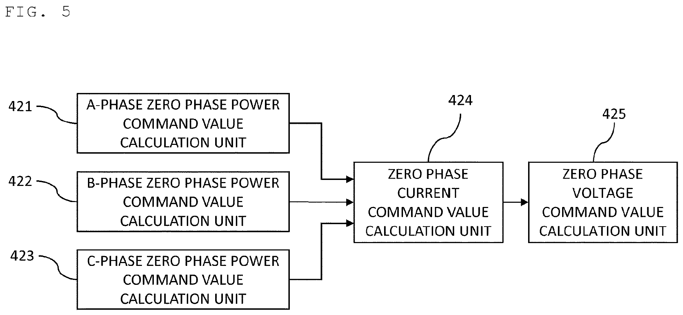

The each-phase SoC equalization control unit 420 calculates the total zero phase component AC voltage command value, which will be described later with reference to FIG. 5.

In addition, the individual SoC equalization control unit 430 calculates the individual battery charging/discharging voltage command value based on the difference of the individual SoCs compared to the each-phase average SoC, and calculates the individual capacitor voltage command value based on the individual battery charging/discharging voltage command value and the total capacitor voltage command value which is the average of the individual capacitor voltage command value.

Herein, the battery voltage control unit 450 can calculate the individual battery voltage command value for controlling the DC/DC converter of the PCS based on a difference between the individual capacitor voltage and the individual capacitor voltage command value and the individual battery voltage.

In addition, the AC/DC converter control unit 460 can control the AC/DC converter 111 of the PCS based on a ratio of the individual capacitor voltage command value and the total capacitor voltage command value that is an average of the individual capacitor voltage command value and the each-phase voltage command value.

That is, in the present invention, the control of the AC/DC converter 111 can be performed by changing the current for each phase without changing the active power and the reactive power by controlling the zero phase component extracted from the positive/negative/zero phase component extraction unit 410, and the AC/DC converters 111 connected to each phase can be individually controlled.

FIG. 5 is a detailed diagram of the each-phase SoC equalization control unit 420 of FIG. 4.

As illustrated in FIG. 5, the each-phase SoC equalization control unit 420 can include an A-phase zero phase component power command value calculation unit 421 calculating the zero phase component power command value of the A-phase PCS 100 based on the difference between the average battery SoC of the A-phase PCS 100 compared to the total battery SoC and the average battery voltage of the A-phase PCS 100, a B-phase zero phase component power command value calculation unit 422 calculating the zero phase component power command value of the B-phase PCS 200 based on the difference between the average battery SoC of the B-phase PCS 200 compared to the total battery SoC and the average battery voltage of the B-phase PCS 200, a C-phase zero phase component power command value calculation unit 423 calculating the zero phase component power command value of the C-phase PCS 300 based on the difference between the average battery SoC of the C-phase PCS 200 compared to the total battery SoC and the average battery voltage of the C-phase PCS 300, a zero phase component current command value calculation unit 424 calculating a total zero phase component current command value based on outputs of the A-phase zero phase component power command value calculation unit 421, the B-phase zero phase component power command value calculation unit 422, and the C-phase zero phase component power command value calculation unit 423, and a zero phase component voltage command value calculation unit 425 calculating a total zero phase component voltage command value based on a difference between an output of the zero phase component current command value calculation unit 424 and a current total zero phase component current.

The each-phase SoC equalization control unit 420 according to the present invention can calculate the zero phase component voltage command value by calculating the current command value capable of controlling only the zero phase component current without changing the active power and the reactive power in the delta connection.

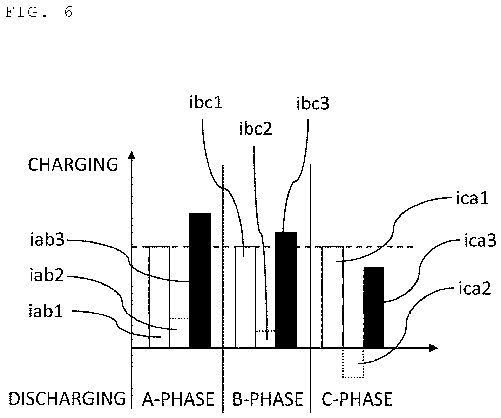

FIG. 6 is the graph analyzing the current flowing through the A-phase PCS 100, the B-phase PCS 200, and the C-phase PCS 300 of FIG. 1.

As illustrated in FIG. 6, in the present invention, the A-phase positive phase component current iab1, the B-phase positive phase component current ibc1, and the C-phase positive phase component current ica1 are the same, but the A-phase, B-phase, and A-phase battery SoCs are different, and thus, the A-phase zero phase component current iab2, the B-phase zero phase component current ibc2, and the C-phase zero phase component current ica2 are generated as zero phase component currents for controlling the difference of the each-phase battery SoC.

In addition, the AC/DC converter 111 is controlled based on this configuration so that a A-phase integrated current iab3 obtained by integrating the A-phase positive phase component iab1 and the A-phase zero phase component current iab2, a B-phase integrated current ibc3 obtained by integrating the B-phase positive phase component ibc1 and the B-phase zero phase component current ibc2, and a C-phase integrated current ica3 obtained by integrating the C-phase positive phase component ica1 and the C-phase zero phase component current ica2, can flow.

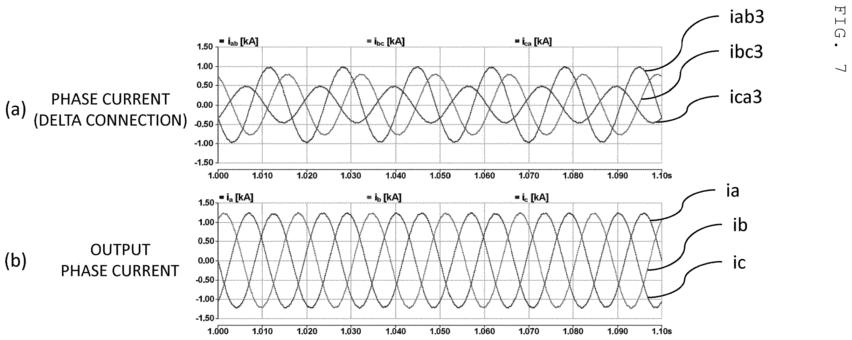

FIG. 7 illustrates in detail the current flowing through the A-phase PCS 100, the B-phase PCS 200, the C-phase PCS 300 and the 3-phase AC power supply 500 of FIG. 1. FIG. 7A is a waveform diagram illustrating the phase current of the delta connection, and FIG. 7B is a waveform diagram illustrating the supply current of the 3-phase AC power supply 500 that is the input of the delta connection.

As illustrated from FIG. 7, in the present invention, the A-phase integrated current iab3, the B-phase integrated current ibc3, and the C-phase integrated current ica3 are controlled differently depending on the each-phase battery SoC, while only the zero phase component is controlled without changing the active power or the reactive power. There is an advantage that the active powers of an a-distribution current ia, a b-distribution current ib, and a c-distribution current 1c do not change.

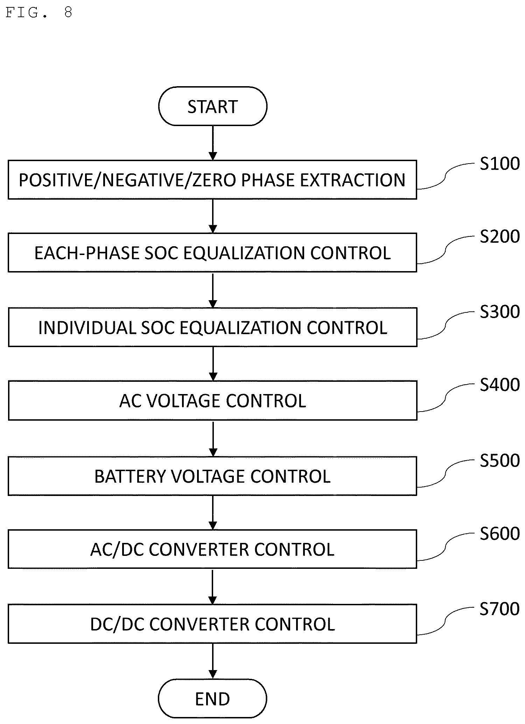

FIG. 8 is a flowchart illustrating the SoC equalization controlling method of the energy storage device based on the delta structure semiconductor transformer according to the embodiment of the present invention.

As illustrated in FIG. 8, the SoC equalization controlling method of the energy storage device based on the delta structure semiconductor transformer according to the present invention includes a positive/negative/zero phase component extracting process (S100), and an each phase SoC equalization controlling process (S200), an individual SoC equalization controlling process (S300), an AC voltage controlling process (S400), a battery voltage controlling process (S500), an AC/DC converter controlling process (S600), and a DC/DC converter controlling process (S700).

In the positive/negative/zero phase component extracting process (S100), the PCS performing the charging/discharging of the 3-phase AC power supply 500 extracts the powers of the positive, negative, and zero phase components of the delta-connected A-phase PCS 100, B-phase PCS 200, and C-phase PCS 300.

In the each-phase SoC equalization controlling process (S200), for the equalization control of the each-phase battery SoC of the A-phase PCS 100, the B-phase PCS 200, and the C-phase PCS 300, a total zero phase component AC voltage command value is calculated based on the powers of positive, negative, and zero phase components, .

In the individual SoC equalization controlling process (S300), individual capacitor voltage command value for the equalization control of the individual battery SoC of the A-phase PCS 100, the B-phase PCS 200, and the C-phase PCS 300 are calculated.

Thereafter, in the AC voltage controlling process (S400), the each-phase AC voltage command value is calculated based on powers of the positive, negative, and zero phase components and the total zero phase component AC voltage command value.

In the battery voltage controlling process (S500), the individual battery voltage command value is calculated based on an output of the individual capacitor voltage command value.

In the AC/DC converter controlling process (S600), the AC/DC converter 111 of the PCS is controlled based on the individual capacitor voltage command value and the each-phase AC voltage command value.

In the DC/DC converter controlling process (S700), the DC/DC converter 113 of the PCS is controlled based on individual battery voltage command values.

Hereinafter, the above processes will be described in more detail, and first, in the positive/negative/zero phase component extracting process (S100), the positive, negative, and zero phase component powers are extracted based on the each-phase AC voltage and each-phase AC current.

In addition, the each-phase SoC equalization controlling process (S200) includes processes of: calculating a zero phase component power command value of the A-phase PCS 100 based on a difference between average battery SoCs of the A-phase PCS 100 compared to a total battery SoC and the average battery voltage of the A-phase PCS by an A-phase zero phase component power command value calculation unit 421; calculating a zero phase component power command value of the B-phase PCS 200 based on a difference between average battery SoCs of the B-phase PCS 200 compared to a total battery SoC and the average battery voltage of the B-phase PCS 200 by a B-phase zero phase component power command value calculation unit 422; calculating a zero phase component power command value of the C-phase PCS 300 based on a difference between average battery SoCs of the C-phase PCS 300 compared to a total battery SoC and the average battery voltage of the C-phase PCS 300 by a C-phase zero phase component power command value calculation unit 423; calculating a total zero phase component current command value based on outputs of the A-phase zero phase component power command value calculation unit 421, the B-phase zero phase component power command value calculation unit 422, and the C-phase zero phase component power command value calculation unit 423 by a zero phase component current command value calculation unit 424; and calculating a total zero phase component voltage command value based on a difference between an output of the zero phase component current command value calculation unit 424 and a current total zero phase component current by a zero phase component voltage command value calculation unit 425.

Herein, in the individual SoC equalization controlling process (S300), the individual battery charging/discharging voltage command value is calculated based on the difference between the individual SoC compared to an each-phase average SoC, and the individual capacitor voltage command value is calculated based on an individual charging/discharging voltage command value and a total capacitor voltage command value that is an average of the individual capacitor voltage command value.

In addition, in the battery voltage controlling process (S500), the individual battery voltage command value for controlling the DC/DC converter of the PCS is calculated based on a difference between the individual capacitor voltage and the individual capacitor voltage command value and the individual battery voltage.

In the AC/DC converter controlling process (S600), the AC/DC converter 111 of the PCS is controlled based on a ratio of the individual capacitor voltage command value and the total capacitor voltage command value that is an average of the individual capacitor voltage command value and the each-phase voltage command value.

That is, in the present invention, the control of the AC/DC converter 111 is performed by changing the current for each phase without changing the active power and the reactive power with control of the zero phase component extracted from the positive/negative/zero phase component extraction unit 410, and the AC/DC converter 111 connected to each phase can be individually controlled.

Accordingly, in the present invention, by controlling equalization of the individual battery SoC in the PCS, overdischarging and overcharging that can be caused by un-equalized battery SoC can be prevented, and the charging time and the discharging time of the system can be effectively managed. In addition, the phenomenon in which the charging time and the discharging time are limited by the specific battery due to un-equalized battery SoC can be prevented.

As described above, the SoC equalization control device and method of the energy storage device based on the delta structure semiconductor transformer according to the present invention has an advantage of preventing overdischarging and overcharging of a specific battery by performing equalization control for SoCs of batteries of PCSs connected in a delta connection and has an advantage in that a charging time and a discharging time of a system can be effectively operated by performing equalization control of each-phase battery SoCs with control of zero phase components of a delta connection and equalizing individual battery SoCs.

The foregoing description includes examples of one or more embodiments. While the present invention has been particularly illustrated and described with reference to exemplary embodiments thereof, it should be understood by the skilled in the art that the invention is not limited to the disclosed embodiments, but various modifications and applications can be made without departing from the scope of the invention, which is solely defined by the appended claims. In addition, differences relating to the modifications and applications should be construed as being included within the scope of the invention as set forth in the appended claims.

### Industrial Applicability

The present invention relates to the device and method for controlling the state of charging (SoC) of the energy storage device and is applicable to the energy storage device.

## Claims

1. An SoC equalization control device of an energy storage device based on a delta structure semiconductor transformer, comprising: Power Conditioning Systems, PCS;
an A-phase PCS, a B-phase PCS, and a C-phase PCS in which PCSs, Power Conditioning Systems, configured to perform charging/discharging from a 3-phase AC power supply are connected in a delta connection; and
an SoC equalization control device configured to control the charging/discharging of a battery (114) so that battery SoCs, State of Charge of the PCSs are equalized, wherein each PCS (111) includes:
a capacitor (112); an AC/DC converter (111) configured to convert an alternating current, AC, into a direct current, DC, and configured to store power in the capacitor; and
a DC/DC converter (113) configured to perform DC/DC conversion in order to store the power stored in the capacitor in the battery,
wherein the SoC equalization control device includes:
a positive/negative/zero phase component extraction unit configured to extract powers of the positive, negative, and zero components of the delta connection based on the each-phase AC voltage and the each-phase AC current;
an each-phase SoC equalization control unit configured to calculate a total zero phase component AC voltage command value based on an output of the positive/negative/zero phase component extraction unit for the equalization control of the each-phase battery SoC of the A-phase PCS, the B-phase PCS, and the C-phase PCS;
an individual SoC equalization control unit configured to calculate an individual capacitor voltage command value for the equalization control of individual battery SoC of the A-phase PCS, the B-phase PCS, and the C-phase PCS;
an AC voltage control unit configured to calculate an each-phase AC voltage command value based on outputs of the positive/negative phase/zero phase component extraction unit and the each-phase SoC equalization control unit;
a battery voltage control unit configured to calculate an individual battery voltage command value based on an output of the individual SoC equalization control unit;
an AC/DC converter control unit configured to control the AC/DC converter of the PCS based on outputs of the individual SoC equalization control unit and the AC voltage control unit; and
a DC/DC converter control unit configured to control the DC/DC converter of the PCS based on an output of the battery voltage control unit.

2. The SoC equalization control device according to claim 1, wherein at least two or more PCSs in the A-phase PCS, the B-phase PCS, and the C-phase PCS are connected in series therein.

3. The SoC equalization control device according to claim 1, wherein the positive/negative/zero phase component extraction unit is configured to extract the powers of the positive, negative, and zero phase components based on the each-phase AC voltage and the each-phase AC current.

4. The SoC equalization control device according to claim 1, wherein the each-phase SoC equalization control unit includes:
an A-phase zero phase component power command value calculation unit configured to calculate a zero phase component power command value of the A-phase PCS based on a difference between the average battery SoC of the A-phase PCS and the total battery SoC and the average battery voltage of the A-phase PCS;
a B-phase zero phase component power command value calculation unit configured to calculate a zero phase component power command value of the B-phase PCS based on a difference between the average battery SoC of the B-phase PCS and the total battery SoC and the average battery voltage of the B-phase PCS;
a C-phase zero phase component power command value calculation unit configured to calculate a zero phase component power command value of the C-phase PCS based on a difference between the average battery SoC of the C-phase PCS and the total battery SoC and the average battery voltage of the C-phase PCS;
a zero phase component current command value calculation unit configured to calculate a total zero phase component current command value based on outputs of the A-phase zero phase component power command value calculation unit, the B-phase zero phase component power command value calculation unit, and the C-phase zero phase component power command value calculation unit; and
a zero phase component voltage command value calculation unit configured to calculate a total zero phase component voltage command value based on a difference between an output of the zero phase component current command value calculation unit and a current total zero phase component current.

5. The SoC equalization control device according to claim 1, wherein the individual SoC equalization control unit is configured to:
calculate an individual battery charging/discharging voltage command value based on the difference of the individual SoCs compared to the each-phase average SoC; and
calculate the individual capacitor voltage command value based on the individual battery charging/discharging voltage command value and the total capacitor voltage command value that is an average of the individual capacitor voltage command value.

6. The SoC equalization control device according to claim 1, wherein the battery voltage control unit is configured to calculate the individual battery voltage command value for controlling the DC/DC converter of the PCS based on a difference between the individual capacitor voltage and the individual capacitor voltage command value and the individual battery voltage.

7. The SoC equalization control device according to claim 1, wherein the AC/DC converter control unit is configured to control the AC/DC converter of the PCS based on a ratio of the individual capacitor voltage command value and the total capacitor voltage command value that is an average of the individual capacitor voltage command value and the each-phase voltage command value.

8. An SoC equalization controlling method of an energy storage device based on a delta structure semiconductor transformer, comprising:
a positive/negative/zero phase component extracting step of extracting powers of positive, negative, and zero phase components of an A-phase PCS, a B-phase PCS, and a C-phase PCS in which PCSs performing charging/discharging from a 3-phase AC power supply are connected in a delta connection;
an each-phase SoC equalization control step of calculating a total zero phase component AC voltage command value based on the powers of the positive, negative, and zero phase components for equalization control of each-phase battery SoCs of the A-phase PCS, the B-phase PCS, and the C-phase PCS;
an individual SoC equalization controlling step of calculating an individual capacitor voltage command value for equalization control of individual battery SoCs of the A-phase PCS, the B-phase PCS, and the C-phase PCS;
an AC voltage controlling step of calculating an each-phase AC voltage command value based on the powers of the positive, negative, and zero phase components and the total zero phase component AC voltage command value;
a battery voltage controlling step of calculating an individual battery voltage command value based on an output of the individual capacitor voltage command value;
an AC/DC converter controlling step of controlling an AC/DC converter of the PCS based on the individual capacitor voltage command value and the each-phase AC voltage command value; and
a DC/DC converter controlling step of controlling the DC/DC converter of the PCS based on the individual battery voltage command value.

9. The SoC equalization controlling method according to claim 8, wherein the positive/negative/zero phase component extracting step is to extract the powers of the positive, negative, and zero phase components based on the each-phase AC voltage and the each-phase AC current.

10. The SoC equalization controlling method according to claim 8, wherein the each-phase SoC equalization control step includes steps of:
calculating a zero phase component power command value of the A-phase PCS based on a difference of average battery SoC of the A-phase PCS compared to a total battery SoC and an average battery voltage of the A-phase PCS by an A-phase zero phase component power command value calculation unit;
calculating a zero phase component power command value of the B-phase PCS based on a difference of average battery SoC of the B-phase PCS compared to a total battery SoC and an average battery voltage of the B-phase PCS by an B-phase zero phase component power command value calculation unit;
calculating a zero phase component power command value of the C-phase PCS based on a difference of average battery SoC of the C-phase PCS compared to a total battery SoC and an average battery voltage of the C-phase PCS by an C-phase zero phase component power command value calculation unit;
calculating a total zero phase component current command value based on outputs of the A-phase zero phase component power command value calculation unit, the B-phase zero phase component power command value calculation unit, and the C-phase zero phase component power command value calculation unit by a zero phase component current command value calculation unit; and
calculating a total zero phase component voltage command value based on a difference between an output of the zero phase component current command value calculation unit and a current total zero phase component current by a zero phase component voltage command value calculation unit.

11. The SoC equalization controlling method according to claim 8, wherein the individual SoC equalization controlling step is to calculate an individual battery charging/discharging voltage command value based on the difference of the individual SoC compared to an each-phase average SoC and calculate the individual capacitor voltage command value based on the individual charging/discharging voltage command value and a total capacitor voltage command value that is an average of the individual capacitor voltage command value.

12. The SoC equalization controlling method according to claim 8, wherein the battery voltage controlling step is to calculate the individual battery voltage command value for controlling the DC/DC converter of the PCS based on a difference between the individual capacitor voltage and the individual capacitor voltage command value and the individual battery voltage.

13. The SoC equalization controlling method according to claim 8, wherein the AC/DC converter controlling step is to control the AC/DC converter of the PCS based on a ratio of the individual capacitor voltage command value and the total capacitor voltage command value that is an average of the individual capacitor voltage command value and the each-phase voltage command value.

## Patentansprüche

1. Ladezustandsausgleich-Steuervorrichtung einer Energiespeichervorrichtung basierend auf einem Deltastruktur-Halbleitertransformator, aufweisend:
Leistungsaufbereitungssysteme, PCS,
ein A-Phasen-PCS, ein B-Phasen-PCS und ein C-Phasen-PCS, in welchen PCS, Leistungsaufbereitungssysteme, die konfiguriert sind, um ein Laden/Entladen aus einer dreiphasigen Wechselstromversorgung durchzuführen, in einer Dreieckschaltung verbunden sind, und
eine Ladezustandsausgleich-Steuervorrichtung, die konfiguriert ist, um das Laden/Entladen einer Batterie (114) zu steuern, so dass Batterieladezustände, SoCs, der PCSs ausgeglichen werden,
wobei jedes PCS (110) aufweist:
einen Kondensator (112), einen Wechselstrom-/Gleichstrom-Wandler (111), der konfiguriert ist, um einen Wechselstrom, AC, in einen Gleichstrom, DC, umzuwandeln, und konfiguriert ist, um Leistung in dem Kondensator zu speichern, und
einen Gleichstrom-/Gleichstrom-Wandler (113), der konfiguriert ist, um eine Gleichstrom-/Gleichstrom-Wandlung durchzuführen, um die im Kondensator gespeicherte Leistung in der Batterie zu speichern,
wobei die Ladezustandsausgleich-Steuervorrichtung aufweist:
eine Positiv-/Negativ-/Nullphasen-Komponente-Extraktionseinheit, die konfiguriert ist, um Leistungen der Positiv-, Negativ- und Null-Komponenten der Dreieckschaltung basierend auf der Jede-Phase-Wechselspannung und dem Jede-Phase-Wechselstrom zu extrahieren,
eine Jede-Phase-Ladezustandsausgleich-Steuereinheit, die konfiguriert ist, um einen Gesamt-Nullphasen-Komponente-Wechselspannungs-Sollwert zu berechnen basierend auf einer Ausgabe der Positiv-/Negativ-/Nullphasen-Komponente-Extraktionseinheit für die Ausgleichssteuerung des Jede-Phase-Batterieladezustands des A-Phasen-PCS, des B-Phasen-PCS und des C-Phasen-PCS,
eine Einzel-Ladezustandsausgleich-Steuereinheit, die konfiguriert ist, um einen Einzel-Kondensatorspannungs-Sollwert für die Ausgleichssteuerung eines Einzel-Batterieladezustands des A-Phasen-PCS, des B-Phasen-PCS und des C-Phasen-PCS zu berechnen,
eine Wechselspannungs-Steuereinheit, die konfiguriert ist, um einen Jede-Phase-Wechselspannungs-Sollwert basierend auf Ausgaben der Positiv-/Negativ-Phasen- /Nullphasen-Komponente-Extraktionseinheit und der Jede-Phase-Ladezustandsausgleich-Steuereinheit zu berechnen,
eine Batteriespannungs-Steuereinheit, die konfiguriert ist, um einen Einzel-Batteriespannungs-Sollwert basierend auf einer Ausgabe der Einzel-Ladezustandsausgleich-Steuereinheit zu berechnen,
eine Wechselstrom-/Gleichstrom-Wandler-Steuereinheit, die konfiguriert ist, um den Wechselstrom-/Gleichstrom-Wandler des PCS basierend auf Ausgaben der Einzel-Ladezustandsausgleich-Steuereinheit und der Wechselspannungs-Steuereinheit zu steuern, und
eine Gleichstrom-/Gleichstrom-Wandler-Steuereinheit, die konfiguriert ist, um den Gleichstrom-/Gleichstrom-Wandler des PCS basierend auf einer Ausgabe der Batteriespannungs-Steuereinheit zu steuern.

2. Ladezustandsausgleich-Steuervorrichtung gemäß Anspruch 1, wobei darin mindestens zwei oder mehr PCSs in dem A-Phasen-PCS, dem B-Phasen-PCS und dem C-Phasen-PCS in Reihe geschaltet sind.

3. Ladezustandsausgleich-Steuervorrichtung gemäß Anspruch 1, wobei die Positiv-/Negativ-/Nullphasen-Komponente-Extraktionseinheit konfiguriert ist, um die Leistungen der Positiv-, Negativ- und Nullphasen-Komponenten basierend auf der Jede-Phase-Wechselspannung und dem Jede-Phase-Wechselstrom zu extrahieren.

4. Ladezustandsausgleich-Steuervorrichtung gemäß Anspruch 1, wobei die Jede-Phase-Ladezustandsausgleich-Steuereinheit aufweist:
eine A-Phasen-Nullphasen-Komponente-Leistungs-Sollwert-Berechnungseinheit, die konfiguriert ist, um einen Nullphasen-Komponente-Leistungs-Sollwert des A-Phasen-PCS basierend auf einer Differenz zwischen dem durchschnittlichen Batterieladezustand des A-Phasen-PCS und dem Gesamtbatterieladezustand sowie der durchschnittlichen Batteriespannung des A-Phasen-PCS zu berechnen,
eine B-Phasen-Nullphasen-Komponente-Leistungs-Sollwert-Berechnungseinheit, die konfiguriert ist, um einen Nullphasen-Komponente-Leistungs-Sollwert des B-Phasen-PCS basierend auf einer Differenz zwischen dem durchschnittlichen Batterieladezustand des B-Phasen-PCS und dem Gesamtbatterieladezustand sowie der durchschnittlichen Batteriespannung des B-Phasen-PCS zu berechnen,
eine C-Phasen-Nullphasen-Komponente-Leistungs-Sollwert-Berechnungseinheit, die konfiguriert ist, um einen Nullphasen-Komponente-Leistungs-Sollwert des C-Phasen-PCS basierend auf einer Differenz zwischen dem durchschnittlichen Batterieladezustand des C-Phasen-PCS und dem Gesamtbatterieladezustand sowie der durchschnittlichen Batteriespannung des C-Phasen-PCS zu berechnen,
eine Nullphasen-Komponente-Strom-Sollwert-Berechnungseinheit, die konfiguriert ist, um einen Gesamt-Nullphasen-Komponente-Strom-Sollwert basierend auf Ausgaben der A-Phasen-Nullphasen-Komponente-Leistungs-Sollwert-Berechnungseinheit, der B-Phasen-Nullphasen-Komponente-Leistungs-Sollwert-Berechnungseinheit und der C-Phasen-Nullphasen-Komponente-Leistungs-Sollwert-Berechnungseinheit zu berechnen, und
eine Nullphasen-Komponente-Spannungs-Sollwert-Berechnungseinheit, die konfiguriert ist, um einen Gesamt-Nullphasen-Komponente-Spannungs-Sollwert basierend auf einer Differenz zwischen einer Ausgabe der Nullphasen-Komponente-Strom-Sollwert-Berechnungseinheit und einem aktuellen Gesamt-Nullphasen-Komponente-Strom zu berechnen.

5. Ladezustandsausgleich-Steuervorrichtung gemäß Anspruch 1, wobei die Einzel-Ladezustandsausgleich-Steuereinheit konfiguriert ist, um:
einen Einzel-Batterielade-/Entladespannungs-Sollwert basierend auf der Differenz der Einzel-Ladezustände im Vergleich zum Jede-Phase-Durchschnitts-Ladezustand zu berechnen, und
den Einzel-Kondensatorspannungs-Sollwert basierend auf dem Einzel-Batterielade-/Entladespannungs-Sollwert und dem Gesamtkondensatorspannungs-Sollwert zu berechnen, der ein Durchschnitt des Einzel-Kondensatorspannungs-Sollwerts ist.

6. Ladezustandsausgleich-Steuervorrichtung gemäß Anspruch 1, wobei die Batteriespannungs-Steuereinheit konfiguriert ist, um den Einzel-Batteriespannungs-Sollwert zum Steuern des Gleichstrom-/Gleichstrom-Wandlers des PCS basierend auf einer Differenz zwischen der Einzel-Kondensatorspannung und dem Einzel-Kondensatorspannungs-Sollwert sowie der Einzel-Batteriespannung zu berechnen.

7. Ladezustandsausgleich-Steuervorrichtung gemäß Anspruch 1, wobei die Wechselstrom-/Gleichstrom-Wandler-Steuereinheit konfiguriert ist, um den Wechselstrom-/Gleichstrom-Wandler des PCS basierend auf einem Verhältnis des Einzel-Kondensatorspannungs-Sollwerts und des Gesamtkondensatorspannungs-Sollwerts, der ein Durchschnitt aus dem Einzel-Kondensatorspannungs-Sollwert und dem Jede-Phase-Spannungs-Sollwert ist, zu steuern.

8. Ladezustandsausgleich-Steuerverfahren für eine Energiespeichervorrichtung basierend auf einem Deltastruktur-Halbleitertransformator, aufweisend:
einen Positiv-/Negativ-/Nullphasen-Komponente-Extraktionsschritt zum Extrahieren von Leistungen von Positiv-, Negativ- und Nullphasen-Komponenten eines A-Phasen-PCS, eines B-Phasen-PCS und eines C-Phasen-PCS, in welchen PCS, die das Laden/Entladen aus einer dreiphasigen Wechselstromversorgung durchführen, in einer Dreieckschaltung verbunden sind,
einen Jede-Phase-Ladezustandsausgleich-Steuerschritt zum Berechnen eines Gesamt-Nullphasen-Komponente-Wechselspannungs-Sollwerts basierend auf den Leistungen der Positiv-, Negativ- und Nullphasen-Komponenten zur Ausgleichssteuerung von Jede-Phase-Batterieladezuständen des A-Phasen-PCS, des B-Phasen-PCS und des C-Phasen-PCS,
einen Einzel-Ladezustandsausgleich-Steuerschritt zum Berechnen eines Einzel-Kondensatorspannungs-Sollwerts für die Ausgleichssteuerung von Einzel-Batterieladezuständen des A-Phasen-PCS, des B-Phasen-PCS und des C-Phasen-PCS,
einen Wechselspannungs-Steuerschritt zum Berechnen eines Jede-Phase-Wechselspannungs-Sollwerts basierend auf den Leistungen der Positiv-, Negativ- und Nullphasen-Komponenten und dem Gesamt-Nullphasen-Komponente-Wechselspannungs-Sollwert,
einen Batteriespannungs-Steuerschritt zum Berechnen eines Einzel-Batteriespannungs-Sollwerts basierend auf einer Ausgabe des Einzel-Kondensatorspannungs-Sollwerts,
einen Wechselstrom-/Gleichstrom-Wandler-Steuerschritt zum Steuern eines Wechselstrom-/Gleichstrom-Wandlers des PCS basierend auf dem Einzel-Kondensatorspannungs-Sollwert und dem Jede-Phase-Wechselspannungs-Sollwert, und
einen Gleichstrom-/Gleichstrom-Wandler-Steuerschritt zum Steuern des Gleichstrom-/Gleichstrom-Wandlers des PCS basierend auf dem Einzel-Batteriespannungs-Sollwert.

9. Ladezustandsausgleich-Steuerverfahren gemäß Anspruch 8, wobei der Positiv-/Negativ-/Nullphasen-Komponente-Extraktionsschritt darin besteht, die Leistungen der Positiv-, Negativ- und Nullphasen-Komponenten basierend auf der Jede-Phase-Wechselspannung und dem Jede-Phase-Wechselstrom zu extrahieren.

10. Ladezustandsausgleich-Steuerverfahren gemäß Anspruch 8, wobei der Jede-Phase-Ladezustandsausgleich-Steuerschritt die folgenden Schritte aufweist:
Berechnen eines Nullphasen-Komponente-Leistungs-Sollwerts des A-Phasen-PCS basierend auf einer Differenz eines durchschnittlichen Batterieladezustand des A-Phasen-PCS im Vergleich zu einem Gesamtbatterieladezustand und einer durchschnittlichen Batteriespannung des A-Phasen-PCS durch eine A-Phasen-Nullphasen-Komponente-Leistungs-Sollwert-Berechnungseinheit,
Berechnen eines Nullphasen-Komponente-Leistungs-Sollwerts des B-Phasen-PCS basierend auf einer Differenz eines durchschnittlichen Batterieladezustands des B-Phasen-PCS im Vergleich zu einem Gesamtbatterieladezustand sowie einer durchschnittlichen Batteriespannung des B-Phasen-PCS durch eine B-Phasen-Nullphasen-Komponente-Leistungs-Sollwert-Berechnungseinheit,
Berechnen eines Nullphasen-Komponente-Leistungs-Sollwerts des C-Phasen-PCS basierend auf einer Differenz eines durchschnittlichen Batterieladezustands des C-Phasen-PCS im Vergleich zu einem Gesamtbatterieladezustand und einer durchschnittlichen Batteriespannung des C-Phasen-PCS durch eine C-Phasen-Nullphasen-Komponente-Leistungs-Sollwert-Berechnungseinheit,
Berechnen eines Gesamt-Nullphasen-Komponente-Strom-Sollwerts basierend auf Ausgaben der A-Phasen-Nullphasen-Komponente-Leistungs-Sollwert-Berechnungseinheit, der B-Phasen-Nullphasen-Komponente-Leistungs-Sollwert-Berechnungseinheit und der C-Phasen-Nullphasen-Komponente-Leistungs-Sollwert-Berechnungseinheit durch eine Nullphasen-Komponente-Strom-Sollwert-Berechnungseinheit, und
Berechnen eines Gesamt-Nullphasen-Komponente-Spannungs-Sollwerts basierend auf einer Differenz zwischen einer Ausgabe der Nullphasen-Komponente-Strom-Sollwert-Berechnungseinheit und einem aktuellen Gesamt-Nullphasen-Komponente-Strom durch eine Nullphasen-Komponente-Spannungs-Sollwert-Berechnungseinheit.

11. Ladezustandsausgleich-Steuerverfahren gemäß Anspruch 8, wobei der Einzel-Ladezustandsausgleich-Steuerschritt darin besteht, einen Einzel-Batterielade-/Entladespannungs-Sollwert basierend auf der Differenz des Einzel-Ladezustands im Vergleich zu einem Jede-Phase-Durchschnitts-Ladezustand zu berechnen und den Einzel-Kondensatorspannungs-Sollwert basierend auf dem Einzel-Lade-/Entladespannungs-Sollwert und einem Gesamtkondensatorspannungs-Sollwert, der ein Durchschnitt des Einzel-Kondensatorspannungs-Sollwerts ist, zu berechnen.

12. Ladezustandsausgleich-Steuerverfahren gemäß Anspruch 8, wobei der Batteriespannungs-Steuerschritt darin besteht, den Einzel-Batteriespannungs-Sollwert zur Steuerung des Gleichstrom-/Gleichstrom-Wandlers des PCS basierend auf einer Differenz zwischen der Einzel-Kondensatorspannung und dem Einzel-Kondensatorspannungs-Sollwert sowie der Einzel-Batteriespannung zu berechnen.

13. Ladezustandsausgleich-Steuerverfahren gemäß Anspruch 8, wobei der Wechselstrom-/Gleichstrom-Wandler-Steuerschritt darin besteht, den Wechselstrom-/Gleichstrom-Wandler des PCS basierend auf einem Verhältnis des Einzel-Kondensatorspannungs-Sollwerts und des Gesamtkondensatorspannungs-Sollwerts zu steuern, der ein Durchschnitt aus dem Einzel-Kondensatorspannungs-Sollwert und dem Jede-Phase-Spannungs-Sollwert ist.

## Revendications

1. Dispositif de contrôle d'égalisation d'état de charge d'un dispositif de stockage d'énergie basé sur un transformateur à semi-conducteur en configuration en triangle, comprenant :
des systèmes de conditionnement de puissance, PCS ;
un PCS de phase A, un PCS de phase B et un PCS de phase C, où les PCS, systèmes de conditionnement de puissance, configurés pour effectuer une charge/décharge à partir d'une alimentation en courant alternatif triphasé, sont connectés en connexion en triangle ; et
un dispositif de contrôle d'égalisation d'état de charge configuré pour contrôler la charge/décharge d'une batterie (114) de manière à égaliser des états de charge de batterie, SoC, des PCS,
dans lequel chaque PCS (110) comprend :
un condensateur (112) ; un convertisseur CA/CC (111) configuré pour convertir un courant alternatif, CA, en un courant continu, CC, et configuré pour stocker de l'énergie dans le condensateur ; et
un convertisseur CC/CC (113) configuré pour effectuer une conversion CC/CC afin de stocker l'énergie stockée dans le condensateur dans la batterie,
dans lequel le dispositif de contrôle d'égalisation d'état de charge comprend :
une unité d'extraction de composante de phase positive/négative/zéro configurée pour extraire des puissances des composantes positive, négative et zéro de la connexion en triangle sur la base de la tension CA de chaque phase et du courant CA de chaque phase ;
une unité de contrôle d'égalisation d'état de charge de chaque phase, configurée pour calculer une valeur de consigne de tension alternative de composante de phase zéro totale sur la base d'une sortie de l'unité d'extraction de composante de phase positive/négative/zéro pour le contrôle d'égalisation de l'état de charge de batterie de chaque phase des PCS de phase A, de phase B et de phase C ;
une unité de contrôle d'égalisation d'état de charge individuel configurée pour calculer une valeur de consigne de tension de condensateur individuelle pour le contrôle d'égalisation d'état de charge de batterie individuel des PCS de phase A, de phase B et de phase C ;
une unité de contrôle de tension alternative configurée pour calculer une valeur de consigne de tension alternative de chaque phase sur la base de sorties de l'unité d'extraction de composante de phase positive/négative/zéro et de l'unité de contrôle d'égalisation d'état de charge de chaque phase ;
une unité de contrôle de tension de batterie configurée pour calculer une valeur de consigne de tension de batterie individuelle sur la base d'une sortie de l'unité de contrôle d'égalisation d'état de charge individuel ;
une unité de contrôle de convertisseur CA/CC configurée pour contrôler le convertisseur CA/CC du PCS sur la base de sorties de l'unité de contrôle d'égalisation d'état de charge individuel et de l'unité de contrôle de tension CA ; et
une unité de contrôle de convertisseur CC/CC configurée pour contrôler le convertisseur CC/CC du PCS sur la base d'une sortie de l'unité de contrôle de tension de batterie.

2. Dispositif de contrôle d'égalisation d'état de charge selon la revendication 1, dans lequel au moins deux ou plusieurs PCS dans les PCS de phase A, de phase B et de phase C y sont connectés en série.

3. Dispositif de contrôle d'égalisation d'état de charge selon la revendication 1, dans lequel l'unité d'extraction de composante de phase positive/négative/zéro est configurée pour extraire les puissances des composantes de phase positive, négative et zéro sur la base de la tension alternative de chaque phase et du courant alternatif de chaque phase.

4. Dispositif de contrôle d'égalisation d'état de charge selon la revendication 1, dans lequel l'unité de contrôle d'égalisation d'état de charge de chaque phase comprend :
une unité de calcul de valeur de consigne de puissance de composante de phase zéro de phase A, configurée pour calculer une valeur de consigne de puissance de composante de phase zéro du PCS de phase A sur la base d'une différence entre l'état de charge de batterie moyen du PCS de phase A et l'état de charge de batterie total, ainsi que la tension de batterie moyenne du PCS de phase A ;
une unité de calcul de valeur de consigne de puissance de composante de phase zéro de phase B, configurée pour calculer une valeur de consigne de puissance de composante de phase zéro du PCS de phase B sur la base d'une différence entre l'état de charge de batterie moyen du PCS de phase B et l'état de charge de batterie total, ainsi que la tension de batterie moyenne du PCS de phase B ;
une unité de calcul de valeur de consigne de puissance de composante de phase zéro de phase C, configurée pour calculer une valeur de consigne de puissance de composante de phase zéro du PCS de phase C sur la base d'une différence entre l'état de charge de batterie moyen du PCS de phase C et l'état de charge de batterie total, ainsi que la tension de batterie moyenne du PCS de phase C ;
une unité de calcul de valeur de consigne de courant de composante de phase zéro configurée pour calculer une valeur de consigne de courant de composante de phase zéro totale sur la base de sorties de l'unité de calcul de valeur de consigne de puissance de composante de phase zéro de phase A, de l'unité de calcul de valeur de consigne de puissance de composante de phase zéro de phase B et de l'unité de calcul de valeur de consigne de puissance de composante de phase zéro de phase C ; et
une unité de calcul de valeur de consigne de tension de composante de phase zéro configurée pour calculer une valeur de consigne de tension de composante de phase zéro totale sur la base d'une différence entre une sortie de l'unité de calcul de valeur de consigne de courant de composante de phase zéro et un courant de composante de phase zéro total actuel.

5. Dispositif de contrôle d'égalisation d'état de charge selon la revendication 1, dans lequel l'unité de contrôle d'égalisation d'état de charge individuel est configurée pour :
calculer une valeur de consigne de tension de charge/décharge de batterie individuelle sur la base de la différence des états de charge individuels par rapport à l'état de charge moyen de chaque phase ; et
calculer la valeur de consigne de tension de condensateur individuelle sur la base de la valeur de consigne de tension de charge/décharge de batterie individuelle et de la valeur de consigne de tension de condensateur totale qui est une moyenne de la valeur de consigne de tension de condensateur individuelle.

6. Dispositif de contrôle d'égalisation d'état de charge selon la revendication 1, dans lequel l'unité de contrôle de tension de batterie est configurée pour calculer la valeur de consigne de tension de batterie individuelle pour contrôler le convertisseur CC/CC du PCS sur la base d'une différence entre la tension de condensateur individuelle et la valeur de consigne de tension de condensateur individuelle et la tension de batterie individuelle.

7. Dispositif de contrôle d'égalisation d'état de charge selon la revendication 1, dans lequel l'unité de contrôle de convertisseur CA/CC est configurée pour contrôler le convertisseur CA/CC du PCS sur la base d'un rapport entre la valeur de consigne de tension de condensateur individuelle et la valeur de consigne de tension de condensateur totale, qui est une moyenne de la valeur de consigne de tension de condensateur individuelle et de la valeur de consigne de tension de chaque phase.

8. Procédé de contrôle d'égalisation d'état de charge d'un dispositif de stockage d'énergie basé sur un transformateur à semi-conducteur à structure en triangle, comprenant :
une étape d'extraction de composante de phase positive/négative/zéro consistant à extraire des puissances des composantes de phase positive, négative et zéro d'un PCS de phase A, d'un PCS de phase B et d'un PCS de phase C, où des PCS effectuant une charge/décharge à partir d'une alimentation en courant alternatif triphasé sont connectés en connexion en triangle ;
une étape de contrôle d'égalisation d'état de charge de chaque phase consistant à calculer une valeur de consigne de tension alternative de composante de phase zéro totale sur la base des puissances des composantes de phase positive, négative et zéro pour le contrôle d'égalisation d'états de charge de batterie de chaque phase des PCS de phase A, de phase B et de phase C ;
une étape de contrôle d'égalisation d'état de charge individuel consistant à calculer une valeur de consigne de tension de condensateur individuelle pour le contrôle d'égalisation d'états de charge de batterie individuels des PCS de phase A, de phase B et de phase C ;
une étape de contrôle de tension alternative consistant à calculer une valeur de consigne de tension alternative de chaque phase sur la base des puissances des composantes de phase positive, négative et zéro et de la valeur de consigne de tension alternative de composante de phase zéro totale ;
une étape de contrôle de tension de batterie consistant à calculer une valeur de consigne de tension de batterie individuelle sur la base d'une sortie de la valeur de consigne de tension de condensateur individuelle ;
une étape de contrôle de convertisseur CA/CC consistant à contrôler un convertisseur CA/CC du PCS sur la base de la valeur de consigne de tension de condensateur individuelle et de la valeur de consigne de tension CA de chaque phase ; et
une étape de contrôle de convertisseur CC/CC consistant à contrôler le convertisseur CC/CC du PCS sur la base de la valeur de consigne de tension de batterie individuelle.

9. Procédé de contrôle d'égalisation d'état de charge selon la revendication 8, dans lequel l'étape d'extraction de composante de phase positive/négative/zéro consiste à extraire les puissances des composantes de phase positive, négative et zéro sur la base de la tension alternative de chaque phase et du courant alternatif de chaque phase.

10. Procédé de contrôle d'égalisation d'état de charge selon la revendication 8, dans lequel l'étape de contrôle d'égalisation d'état de charge de chaque phase comprend les étapes consistant à :
calculer une valeur de consigne de puissance de composante de phase zéro du PCS de phase A sur la base d'une différence d'un état de charge de batterie moyen du PCS de phase A par rapport à un état de charge de batterie total et une tension de batterie moyenne du PCS de phase A par une unité de calcul de valeur de consigne de puissance de composante de phase zéro de phase A ;
calculer une valeur de consigne de puissance de composante de phase zéro du PCS de phase B sur la base d'une différence d'un état de charge de batterie moyen du PCS de phase B par rapport à un état de charge de batterie total et une tension de batterie moyenne du PCS de phase B, par une unité de calcul de valeur de consigne de puissance de composante de phase zéro de phase B ;
calculer une valeur de consigne de puissance de composante de phase zéro du PCS de phase C sur la base d'une différence d'un état de charge de batterie moyen du PCS de phase C par rapport à un état de charge de batterie total et une tension de batterie moyenne du PCS de phase C par une unité de calcul de valeur de consigne de puissance de composante de phase zéro de phase C ;
calculer une valeur de consigne de courant de composante de phase zéro totale sur la base de sorties de l'unité de calcul de valeur de consigne de puissance de composante de phase zéro de phase A, de l'unité de calcul de valeur de consigne de puissance de composante de phase zéro de phase B et de l'unité de calcul de valeur de consigne de puissance de composante de phase zéro de phase C par une unité de calcul de valeur de consigne de courant de composante de phase zéro ; et
calculer une valeur de consigne de tension de composante de phase zéro totale sur la base d'une différence entre une sortie de l'unité de calcul de valeur de consigne de courant de composante de phase zéro et un courant de composante de phase zéro total actuel par une unité de calcul de valeur de consigne de tension de composante de phase zéro.

11. Procédé de contrôle d'égalisation d'état de charge selon la revendication 8, dans lequel l'étape de contrôle d'égalisation d'état de charge individuel consiste à calculer une valeur de consigne de tension de charge/décharge de batterie individuelle sur la base de la différence de l'état de charge individuel par rapport à un état de charge moyen de chaque phase, et à calculer la valeur de consigne de tension de condensateur individuelle sur la base de la valeur de consigne de tension de charge/décharge individuelle et d'une valeur de consigne de tension de condensateur totale qui est une moyenne de la valeur de consigne de tension de condensateur individuelle.

12. Procédé de contrôle d'égalisation d'état de charge selon la revendication 8, dans lequel l'étape de contrôle de tension de batterie consiste à calculer la valeur de consigne de tension de batterie individuelle pour contrôler le convertisseur CC/CC du PCS sur la base d'une différence entre la tension de condensateur individuelle et la valeur de consigne de tension de condensateur individuelle et la tension de batterie individuelle.

13. Procédé de contrôle d'égalisation d'état de charge selon la revendication 8, dans lequel l'étape de contrôle de convertisseur CA/CC consiste à contrôler le convertisseur CA/CC du PCS sur la base d'un rapport entre la valeur de consigne de tension de condensateur individuelle et la valeur de consigne de tension de condensateur totale qui est une moyenne de la valeur de consigne de tension de condensateur individuelle et de la valeur de consigne de tension de chaque phase.
